# EUROPEAN PATENT APPLICATION

(11) **EP 1 813 921 A1**
(43) Date of publication of application: **01.08.2007**
(21) Application number: 07001519.3
(22) Date of filing: 24.01.2007
(51) Int. Cl.: G01H 3/08

(54) **Method of extracting, device for extracting and device for inspecting abnormal sound**

(30) Priority: 30.01.2006 JP 2006020578
(71) Applicant: OMRON CORPORATION, Kyoto-shi, Kyoto 600-8530 (JP)
(72) Inventor: Togawa, Yoshizo, Shiokoji-dori Shimogyo-ku Kyoto 600-8530 (JP); Iida, Toyoo, Shiokoji-dori Shimogyo-ku Kyoto 600-8530 (JP)
(74) Representative: Kilian, Helmut

(57) **Abstract**

Abnormal sound desired for inspection is extracted by inputting NG signal containing the abnormal sound and OK signal not containing this abnormal sound but containing noise that is contained in the NG signal, separating the NG signal and the OK signal each into a stationary component having stationary property, white noise and a nonstationary component having nonstationary property, and removing noise individually from the stationary component, the white noise and the nonstationary component having nonstationary property.

## Description

### Background of the Invention

This invention relates to a method of extracting abnormal sound for inspection by analyzing the sound generated from mechanical apparatus of various kinds, a device for carrying out such a method and a device for inspecting such abnormal sound.

It has been known to inspect for an abnormality in the engine or transmission of an automobile by analyzing sound or vibrations. In an inspection method of this kind, the common practice has been to depend on the five senses of a skilled operator to check a physical phenomenon such as sound or vibrations to judge the presence of absence of an abnormality and to determine its details. As described in Japanese Patent Publication Tokkai 11-173909, for example, such inspection of abnormal sound is becoming automated in recent years.

On the other hand, attempts to make high-class automobiles and household electrical apparatus quieter have been making progress. Attempts are also being made to eliminate abnormal sounds inside automobiles such as those from the internal panels or due to a displaced sunshade during the course of their inspection.

In order to carry out such an inspection successfully, it is necessary to accurately capture the abnormal sound originating from a certain workpiece by extracting it and determining the presence or absence of an abnormality and distinguishing its details.

In the environment of inspecting abnormal sound, sounds of various kinds are generally being generated such as background noise, operating sounds of the workpiece itself and sounds of the apparatus for driving the workpiece. If there are many kinds of such sound (noise) or if there are similar sounds, it is difficult to clearly distinguish a desired abnormal sound.

In order to make an abnormal sound under consideration clearer, technologies for extracting only the target abnormal sound and technologies for eliminating or reducing noise other than the target abnormal sound are being required, and the so-called spectral subtraction (SS) method is one of such technologies. As described in Japanese Patent Publication Tokkai 2001-134287, the SS method is a technology of extracting an abnormal sound contained in a target signal being processed by subtracting signals with data on sounds (noise) other than the target abnormal sound on the frequency spectrum.

Sounds that are being generated in the environment of inspection can be roughly classified into stationary sounds with the nature of signal that is constant with time and nonstationary sounds of which the nature of the signal changes with time. A shock sound that is generated when objects collide is a nonstationary sound of which the amplitude level varies greatly over a short period of time and is frequently encountered in the environment of inspection of a workpiece.

By the SS method, Fourier transforms are frequently used for time-frequency transforms but it is difficult by this method to express a nonstationary sound on the frequency domain. For extracting an abnormal sound, furthermore, extraction and elimination processes must be carried out appropriately even if nonstationary sounds are included in abnormal sounds and noise.

Japanese Patent Publication Tokkai 07-43295 discloses the inverse filtering method as another example of prior art technology. By this method, model parameters are estimated by providing an autoregressive model, which is one of linear prediction models, and an inverse filter is designed by using the obtained parameters. A residual signal is obtained by passing the target signal to be processed through this inverse filter and thereby removing normal signals (noise signals) from the target signal. The residual signal contains a white noise component and a nonstationary component.

By the inverse filtering method, however, a nonstationary sound with the amplitude level changing greatly over a short time such as a shock sound cannot be predicted by a linear prediction model. For extracting an abnormal sound, furthermore, noise must be eliminated appropriately even if nonstationary sounds are included in abnormal sounds and noise, as explained above.

### Summary of the Invention

It is therefore an object of this invention to make the noise removable or make only the abnormal sound extractable even if stationary components, nonstationary components and white noise components are contained in an abnormal sound or noise other than abnormal sound so as to extract the abnormal sound.

A method of this invention is for extracting abnormal sound and may be characterized as comprising the steps of inputting NG signal containing an abnormal sound and OK signal not containing this abnormal sound but containing noise that is contained in the NG signal, separating the NG signal and the OK signal each into a stationary component having stationary property, white noise and a nonstationary component having nonstationary property, and extracting abnormal sound or removing noise individually from the stationary component, the white noise and the nonstationary component having nonstationary property.

In the above, the NG signal is the signal from which it is desired to extract an abnormal sound or to remove the noise. According to the method of this invention, the NG signal and the OK signal are each separated into a stationary component having stationary property, white noise and a nonstationary component having nonstationary property. The abnormal sound is extracted or noise is removed individually from the stationary component, the white noise and the nonstationary component having nonstationary property, and the results are used for restructuring. Thus, it is possible to obtain an abnormal sound signal from which the noise component having stationary property and the noise component having nonstationary property are both removed.

The aforementioned separating step may preferably comprise the steps of determining order of a linear prediction model and calculating filter coefficients and residual signal each of the NG signal and the OK signal. The autoregressive (AR) model or the autoregressive moving average (ARMA) may be used as the linear prediction model.

The process of removing the noise component having stationary property may be carried out by removing the noise signal in the NG signal from the stationary component separated as above by using the filter coefficients obtained by carrying out a parameter estimating process of the linear prediction model each on the NG signal and the OK signal. Data on this noise signal to be removed may be obtained from the filter coefficients of the OK signal.

In the above, the parameter estimating process may be carried out by using known methods such as the Yule-Walker algorithm and the Burg algorithm. The filter coefficients serve to represent components of a signal having a stationary characteristic.

The aforementioned spectral subtraction (SS) method may be used when the noise removing process is carried out in the frequency region. In this situation, the filter coefficients are converted into a spectrum.

The nonstationary component and the white noise component that have been separated may be used for removing the white noise and the noise having nonstationary property. For this noise removing process, the residual signal obtained by the parameter estimating process of the linear prediction model is used each for the NG signal and the OK signal such that the noise signal in the NG signal is removed. The residual signal represents the white noise and the nonstationary component.

If the nature of the target abnormal sound in the NG signal and the noise to be removed is preliminarily known, the abnormal sound component contained in the residual signal of the NM signal may be extracted not by using the residual signal of the OK signal but by carrying out the noise removing process. If it is known that the noise is white noise, for example, only the component having nonstationary property can be extracted by separating the residual signal into a component having nonstationary property and white noise component. The separation process may be carried out by a threshold process based on a statistical quantity or the wavelet process.

If the property of the target abnormal sound in the NG signal and the noise to be removed is not known, the abnormal sound component contained in the residual signal of the NG signal can be extracted by estimating the nature of the noise from the residual signal of the inputted OK signal and using the output from this estimating process to carry out a noise removing process from the residual signal of the NG signal.

The extraction of abnormal sound or the noise removing process may be carried out according to this invention after the filter coefficients of the linear prediction model are converted into a spectrum. In this manner, a process may be carried out more flexibly, for example, by combining with the SS method or by adjusting a component to be emphasized or removed by means of a frequency equalizer, than by conventional methods such as by means of reverse filtering.

It is preferable to include in the method of this invention the step of restructuring the sound from the result of the processes described above, and this restructuring step preferably comprises the steps of calculating filter coefficients for the sound component spectrum obtained from the NG signal by extracting the abnormal sound or removing the noise therefrom and calculating an output signal from residual signal of the sound component obtained from the NG signal by extracting the abnormal sound or removing the noise therefrom and the filter coefficients.

It is preferable that the aforementioned restructuring step comprises the step of converting the spectrum of the sound component obtained from the NG signal by extracting the abnormal sound or removing the noise therefrom into a time signal.

It is further preferable that the aforementioned restructuring step comprises the step of adding the residual signal of the sound component obtained from the NG signal by extracting the abnormal sound or removing the noise therefrom and the aforementioned time signal.

A device of this invention for extracting abnormal sound may be characterized as comprising an input device for inputting NG signal that contains abnormal sound and OK signal that does not contain the abnormal sound but contains noise that is contained in the NG signal, an extraction filter comprising blocks for carrying out a method of this invention as described above, and an output device that outputs signals outputted from the extraction filter.

A device of this invention for inspecting abnormal sound may be characterized as comprising an input device for inputting a signal of sound or vibrations obtained from a target object of inspection, an extraction filter comprising blocks for carrying out a method of this invention as described above, a judging device for extracting a characteristic quantity from an output signal outputted from the extraction filter and using this characteristic quantity to make a judgment regarding whether the target object is good or not good and an output device that outputs the judgment by the judging device wherein the input device serves to prepare the inputted signal of sound or vibrations and normal data obtained from a normal object respectively as NG signal and OK signal.

In summary, the present invention makes it possible to extract only the abnormal sound or remove the noise to thereby obtain an abnormal sound signal even if the abnormal sound and noise other than the abnormal sound contain a nonstationary component or white noise.

### Brief Description of the Drawings

Fig. 1 is a block diagram of an extraction device for abnormal sound embodying this invention.
Fig. 2 is a block diagram of the extraction filter shown in Fig. 1.
Fig. 3 is a detailed functional block diagram of the spectrum noise removing block.
Fig. 4 is a detailed functional block diagram of the noise removing block.
Fig. 5 is a detailed functional block diagram of another noise removing block.
Fig. 6 is a detailed functional block diagram of the restructuring block.
Fig. 7 is a detailed functional block diagram of another restructuring block.
Fig. 8 is a detailed functional block diagram of still another restructuring block.
Fig. 9 is a block diagram of an inspection device for abnormal sound embodying this invention.
Fig. 10 is a block diagram of the extraction filter shown in Fig. 9.

### Detailed Description of the Invention

The invention is described below with reference to drawings. In order to make the description more easily understandable, however, some expressions that are frequently used in the description will be initially defined.

Firstly, expression "sound" is not limited to the sound that can be heard by a person but will also include vibrations.

Next, "NG signal" means any signal that includes both a target abnormal sound to be extracted and sounds (noise) other than this target abnormal sound. The magnitude of the abnormal sound component contained in the NG signal depends on the signal. If the abnormal sound component contained in the NG signal is zero, it is an equivalent of an OK signal. If a mechanical apparatus has an abnormal condition, the sound that is produced thereby will include not only a normal sound, which will be produced when the apparatus is in normal condition, and a background sound but also a sound, which is different from the normal sound. This latter sound, which is different from the normal sound, is referred to as the abnormal sound, which is the target sound to be extracted. Sounds other than the abnormal sound are not to be extracted, and they are noise. The noise includes not only the background noise but also the sound of operation of the mechanical apparatus (or workpiece) itself and the operating sound of the apparatus for driving the workpiece. For the convenience of description, "NG signal" is hereinafter defined as a signal including both abnormal sound and noise.

By contrast, "OK signal" is hereinafter defined as a signal containing only the aforementioned noise contained in the NG signal without containing the abnormal sound. In other words, NG signal = OK signal + noise.

"Stationary component" is a component having a stationary nature, corresponding to a filter coefficient in the linear prediction model. It includes the frequency characteristics of the stationary component exclusive of white noise components in a stationary process, which means a process wherein the statistical characteristic of the signal does not vary with time.

"Nonstationary component" which is a component having a nonstationary nature and "white noise component" are components corresponding to the residual signal in the linear prediction model, including both a nonstationary component that represents the nonstationary process and a white noise component, which represents the stationary process.

In the above, "nonstationary process" represents a process of which the statistical characteristic of signal changes with time.

If the NG signal and the OK signal really represent a stationary process, the residual signal includes only a white noise component. If a nonstationary component is included in the NG signal and the OK signal, the component having this nonstationary characteristic is included in the residual signal.

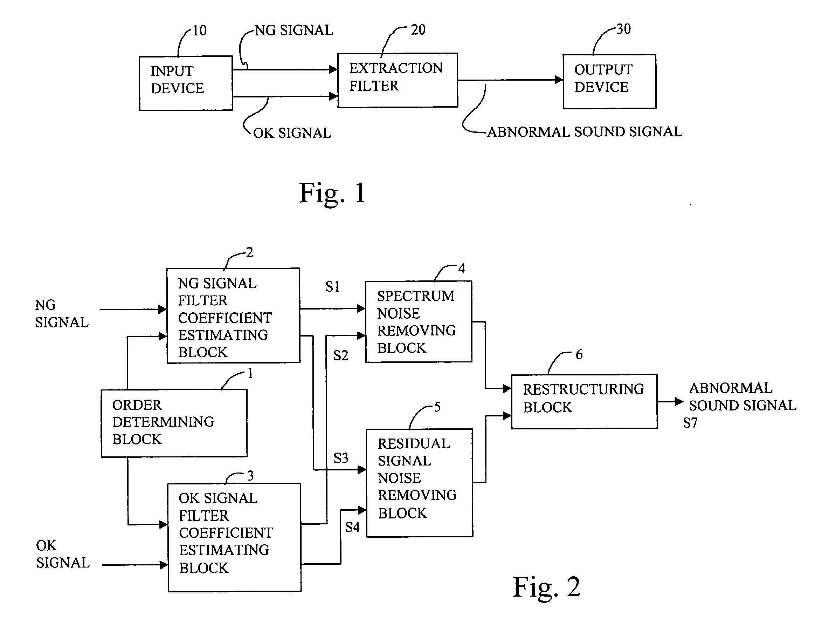

Fig. 1 shows a device for extracting abnormal sound for carrying out the extraction method of this invention, comprising an input device 10, an extraction filter 20 and an output device 30. The input device 10 may comprise a microphone sensor or a vibration sensor for inputting NG signal that includes an abnormal sound to be extracted and OK signal that serves as a standard for the extraction, not including the aforementioned abnormal sound but including information on noise included in the NG signal. The input may be from a hard disk or a memory.

The extraction filter 20 serves to carry out the extraction method to be described below and is comprised of a plurality of blocks as shown in Fig. 2 such as order-determining block 1, NG signal filter coefficient-estimating block 2, OK signal filter coefficient-estimating block 3, spectrum noise-removing block 4, residual signal noise-removing block 5 and restructuring block 6. The output device 30 serves to output abnormal sound signals and may comprise a speaker.

"Order-determining block 1" serves to output the order number of the linear prediction model. This may be done by the method of preliminarily carrying out a verification test on the relationship between the order number and the effect of noise removal and providing a fixed value on the basis of its result or the method of using the inputted NG signal and OK signal and according to the AIC criterion or the FPE criterion which are well known order determination methods. The orders to be outputted to the coefficient-estimating processes (to be explained below) may be different.

"NG signal filter coefficient-estimating block 2" serves to estimate the linear prediction model on the basis of the dispersion time data of the inputted NG signal and the order of the linear prediction model and to output the filter coefficient (S1) of the NG signal and the residual signal (S3). The Yule-Walker algorithm, the Levinson-Durbin algorithm and the Burg algorithm, which are parametric estimating methods of autoregressive model or autoregressive moving average model, are used. The Burg algorithm is preferable when the number of data points is small because a stable estimate is possible.

As explained above, the NG signal filter coefficient-estimating block 2 outputs the stationary component to the spectrum noise removing block 4 (to be explained below) as the filter coefficient (S1) and the white noise to the residual signal noise removing block 5 (also to be explained below) as the residual signal (S3) if the NG signal is stationary. If the NG signal contains both a stationary component and a nonstationary component, the stationary component is outputted as the filter coefficient (S1) to the spectrum noise removing block 4 and the nonstationary component and the white noise component are outputted as the residual signal (S3) to the residual signal noise removing block 5.

"OK signal filter coefficient estimating block 3" is for estimating a linear prediction model based on discrete data of inputted OK signal and the order number of the linear prediction model and outputting the filter coefficient of the OK signal and the residual signal. The method of this process is similar to that of the aforementioned NG signal filter coefficient-estimating block 2.

In this situation, too, as explained above with respect to the linear prediction model, the stationary component is outputted as the filter coefficient (S2) to the spectrum noise removing block 4 and the white noise is outputted as the residual signal (S4) to the residual signal noise removing block 5 if the OK signal is stationary. If the OK signal contains both a stationary component and a nonstationary component, the stationary component is outputted as the filter coefficient (S2) to the spectrum noise removing block 4 and the nonstationary component and the white noise component are outputted as the residual signal (S4) to the residual signal noise removing block 5.

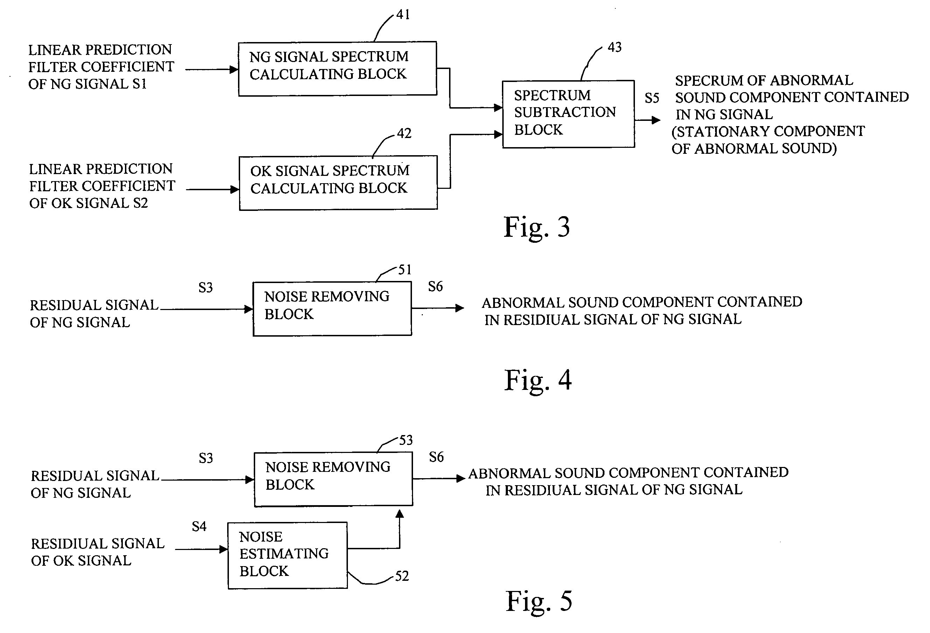

"Spectrum noise removing block 4" is for inputting the filter coefficients (S1) and (S2) respectively of the NG signal and the OK signal separated respectively by the NG signal filter coefficient-estimating block 2 and the OK signal filter coefficient estimating block 3 and outputting as (S5) the spectrum of the abnormal sound component (the stationary component of the abnormal sound) contained in the NG signal. This will be explained more in detail with reference to Fig. 3.

The first step of this process is carried out by "NG signal spectrum calculating block 41" and "OK signal spectrum calculating block 42" for calculating the spectrum each from the filter coefficient (S1) of the NG signal and the filter coefficient (S2) of the OK signal. The spectrum in the above may each be an amplitude spectrum, a power spectrum or a logarithmically converted power spectrum.

The second step of this process is carried out by "spectrum subtracting block 43" for removing the OK signal (the noise component) contained in the NG signal by subtracting the spectrum of the time sequence model of the OK signal from that of the NG signal and thereby obtaining spectrum S5 of the abnormal sound component in the stationary component contained in the NG signal.

This is because, as explained above, the NG signal includes the abnormal sound and noise and the OK signal includes only the noise. The subtraction process is carried out not as a simple differentiating process but makes use of the processes (such as subtraction coefficient attachment and flooring process) that are used in the spectral subtraction method. As post-processing, a smoothing process may be carried out on the spectrum after subtraction process. There is a need to obtain frequency data in the spectral subtraction method, and general methods therefor include the use of the Fourier transforms. More specifically, discrete Fourier transforms (DFT) and discrete cosine transforms (DCT) are used but it is difficult to appropriately represent a nonstationary component by these methods, there being functional limitations. According to this invention, since nonstationary components are removed by the aforementioned separation, there is no influence from the nonstationary parts in the case of a process on frequencies and the process is limited only to the stationary parts. Thus, extraction of stationary parts in the abnormal sound including the NG signal can be carried out accurately and more stably.

"Residual signal noise removing block 5" is for extracting the abnormal sound components from the residual signal of the NG signal and outputting as (S6) the abnormal sound components contained in the NG signal and having a nonstationary nature or the nature of a white noise. This is the process of removing noise from residual signals (S3) and (S4) separated respectively from "NG signal filter coefficient estimating block 2" and "OK signal filter coefficient estimating block 3", or the process of obtaining the abnormal sound components contained in the residual signal of the NG signal. Specific examples of these processes are shown in Figs. 4 and 5.

If the nature of the abnormal sound and noise included in the NG signal is unknown, an abnormal sound extracting process (a noise removing process) by using only the residual signal of the NG signal and without using the OK signal can be carried out by "noise removing block 51". If the abnormal sound is a shock component having a specified waveform, for example, a threshold process or a wavelet process may be carried out to extract the target abnormal sound (S6) from residual signal (S3).

If the noise to be removed is a white noise, as another example, a process for separating components having a nonstationary characteristic from white noise components may be carried out on nonstationary components and white noise components contained in a residual signal of the NG signal to remove the while noise.

If the nature of the target abnormal sound contained in the NG signal or of the noise to be removed is unknown, the nature of the noise may be estimated from residual signal (S4) of the inputted OK signal by "noise estimating block 52" and by carrying out an abnormal sound extracting process by using this estimated nature of the noise by "noise removing block 53", or a process of obtaining abnormal sound component (S6) by removing the noise contained in residual signal (S3) of the NG signal. There is a method, for example, of obtaining the probability density of a residual signal of the OK signal from the amplitude distribution and extracting the noise component contained in the residual signal of the NG signal by using the obtained information on dispersion, distortion and sharpness.

"Restructuring block 6" is for obtaining abnormal sound signal (S7) from spectrum of abnormal component contained in the NG signal (stationary component of abnormal sound) (S5) and abnormal component contained in the NG signal (nonstationary component of abnormal sound and white noise component) (S6).

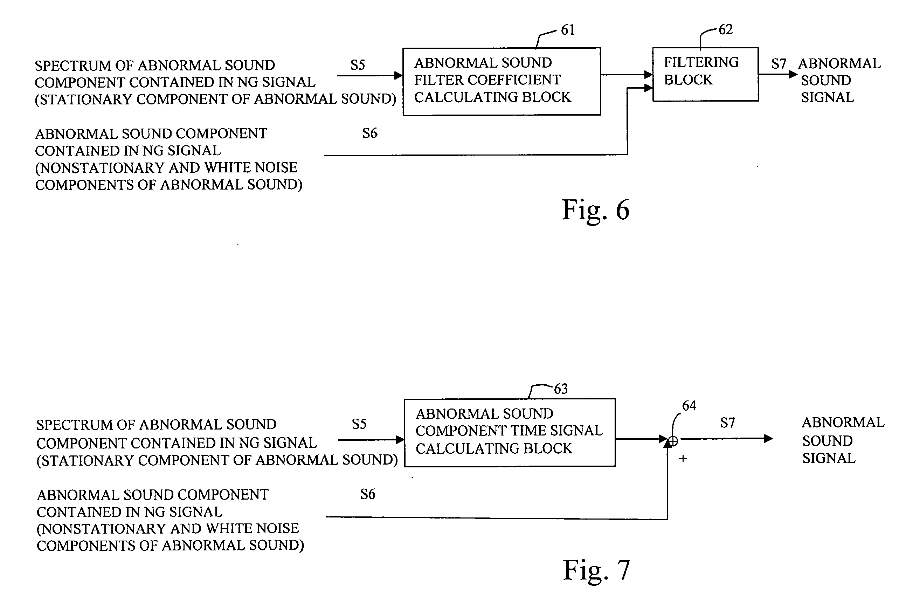

Specific examples of this process are explained next with reference to Figs. 6-8.

Fig. 6 shows a first step of designing a linear filter by using the spectrum of abnormal sound component (stationary component of abnormal sound) (S5) contained in the NG signal by "abnormal sound filter coefficient calculating block 61 ". Explained more specifically, filter coefficients of an FIR filter or an IIR filter having the spectral characteristics of abnormal sound component are calculated. Examples of method of designing a filter include the method of obtaining the filter coefficient of an FIR filter by a method of the least squares.

In the second step, "filter process block 62" calculates the output signal of the linear filter by using as input signal the residual signal of abnormal sound component contained in the NG signal (nonstationary or white noise component of abnormal sound) (S6) and the results of the calculation process of the filter coefficient of the abnormal component obtained in the first step. As a result of this calculation, a signal (S7) of desired abnormal sound to be extracted from the NG signal can be obtained.

Fig. 7 shows a situation of an abnormal sound that can be expressed as a sum of a stationary component, a nonstationary component and a white noise component. An appropriate extraction of abnormal sound is carried out by a restructuring process such as the addition of the nonstationary and white noise components of the abnormal sound extracted from a residual signal and the stationary component of the abnormal sound extracted from the filter coefficient.

This process may be carried out in the following two steps. In the first step, "abnormal sound component time signal calculating block 63" converts the spectrum (S5) of the abnormal sound component contained in the NG signal to a time signal, say, by using the inverse fast Fourier transform (IFFT) method. If phase data are required, they may be obtained by carrying out a fast Fourier transform (FFT) on the NG signal.

In the second step, "addition process block 64" serves to add the signal obtained in the first step to the residual signal of the abnormal sound component contained in the NG signal.

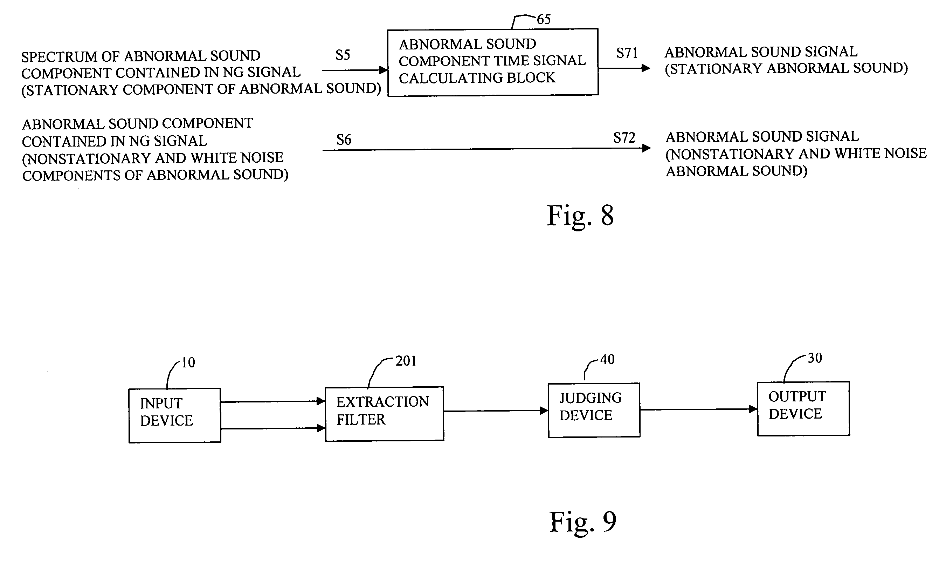

Fig. 8 shows "abnormal sound component time signal calculating block 65" calculating the spectrum of the abnormal sound component contained in the NG signal (stationary component of the abnormal sound) and directly outputting the result of this calculation process as abnormal sound signal (stationary abnormal sound) (S71) or the residual signal of the abnormal sound contained in the NG signal directly as abnormal sound signal (S72).

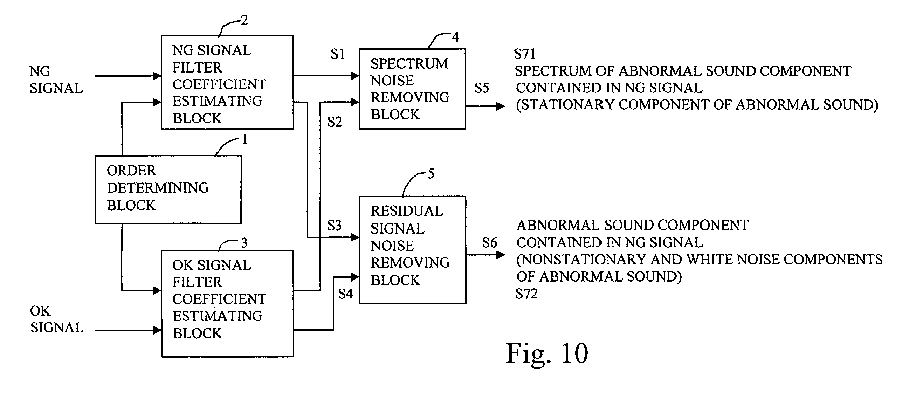

Fig. 9 is a block diagram of a device for inspecting abnormal sound comprising an input device 10 for inputting sound or a signal of vibrations obtained from a target object of inspection, an extraction filter 201 for abnormal sound having a block structure shown in Fig. 10, a judging device 40 for judging whether the target object of inspection is good or not good based on the abnormal sound signal from the extraction filter 201 and an output device 30 for outputting the result of judgment by the judging device 40.

Explained more specifically, the input device 10 is for measuring the sound or vibrations generated by the target object of inspection, obtaining an NG signal from a target object of inspection and an OK signal from a normal one of the target objects of inspection and outputting them as discrete time data. It may comprise a microphone sensor or a vibration sensor and an AD converter for carrying out AD conversion of these signal outputs. Data may alternatively be read out from a hard disk or a memory.

The extraction filter 201 is structured as shown in Fig. 10 and is different from the filter 2 shown in Fig. 2 in that sound is not restructured after the extraction of abnormal sound or the removal of noise. In other respects, the extraction filters 2 and 201 may be considered as being structured alike.

The judging device 40 is for extracting a characteristic quantity from the abnormal sound signal from the extraction filter 201 and making the aforementioned judgment on the target object of inspection by using this characteristic quantity. The judgment on the NG signal is rendered by comparing the NG signal with the OK signal.

The output device 30 is for outputting the result of judgment by the judging device 40 and may comprise a display device.

The extraction device and the inspection device described above may be formed, for example, with a sensor serving as the input device 10, an amplifier connected to this sensor, an AD converter board connected to the amplifier, a speaker connected to the AD converter board, a personal computer serving as a processing device connected to the AD converter board, a hard disk serving as a recording device connected to the personal computer and a speaker and a monitor serving as the output device for outputting the results processed by the personal computer.

## Claims

1. A method of extracting abnormal sound components from a sound, said method comprising:
a first step of inputting NG signal and OK signal, said NG signal containing an abnormal sound and said OK signal not containing said abnormal sound and containing noise that is contained in said NG signal;
a second step of separating said NG signal and said OK signal each into a stationary component having stationary property, white noise and a nonstationary component having nonstationary property; and
a third step of removing noise individually from said stationary component, white noise and nonstationary component having nonstationary property.

2. The method of claim 1 wherein said second step includes the steps of:
determining order of a linear prediction model; and
calculating filter coefficients and residual signal each of said NG signal and said OK signal.

3. The method of claim 1 further comprising a fourth step of restructuring the sound after said third step.

4. The method of claim 2 further comprising a fourth step of restructuring the sound after said third step.

5. The method of claim 4 wherein said fourth step comprises the steps of:
calculating filter coefficients for the sound component spectrum obtained from said NG signal by removing the noise therefrom; and
calculating an output signal from residual signal of the sound component obtained from said NG signal by removing the noise therefrom and said filter coefficients.

6. The method of claim 3 wherein said fourth step comprises the step of converting the spectrum of the sound component obtained from said NG signal by removing the noise therefrom into a time signal.

7. The method of claim 4 wherein said fourth step comprises the step of converting the spectrum of the sound component obtained from said NG signal by removing the noise therefrom into a time signal.

8. The method of claim 6 wherein said fourth step further comprises the step of adding the residual signal of the sound component obtained from said NG signal by removing the noise therefrom and said time signal.

9. The method of claim 7 wherein said fourth step further comprises the step of adding the residual signal of the sound component obtained from said NG signal by removing the noise therefrom and said time signal.

10. A device for extracting abnormal sound, said device comprising:
an input device for inputting NG signal that contains abnormal sound and OK signal that does not contain said abnormal sound but contains noise that is contained in said NG signal;
an extraction filter; and
an output device that outputs signals outputted from said extraction filter;
wherein said extraction filter carries out a method that comprises:
a first step of inputting NG signal and OK signal, said NG signal containing an abnormal sound and said OK signal not containing said abnormal sound and containing noise that is contained in said NG signal;
a second step of separating said NG signal and said OK signal each into a stationary component having stationary property, white noise and a nonstationary component having nonstationary property;
a third step of removing noise individually from said stationary component, white noise and nonstationary component having nonstationary property; and
a fourth step of restructuring the sound after said third step.

11. The device of claim 10 wherein said second step includes the steps of:
determining order of a linear prediction model; and
calculating filter coefficients and residual signal each of said NG signal and said OK signal.

12. The device of claim 11 wherein said fourth step comprises the steps of:
calculating filter coefficients for the sound component spectrum obtained from said NG signal by removing the noise therefrom; and
calculating an output signal from residual signal of the sound component obtained from said NG signal by removing the noise therefrom and said filter coefficients.

13. The device of claim 10 wherein said fourth step comprises the step of converting the spectrum of the sound component obtained from said NG signal by removing the noise therefrom into a time signal.

14. The device of claim 11 wherein said fourth step comprises the step of converting the spectrum of the sound component obtained from said NG signal by removing the noise therefrom into a time signal.

15. The device of claim 13 wherein said fourth step further comprises the step of adding the residual signal of the sound component obtained from said NG signal by removing the noise therefrom and said time signal.

16. The device of claim 14 wherein said fourth step further comprises the step of adding the residual signal of the sound component obtained from said NG signal by removing the noise therefrom and said time signal.

17. A device for inspecting abnormal sound, said device comprising:
an input device for inputting a signal of sound or vibrations obtained from a target object of inspection;
an extraction filter;
a judging device for extracting a characteristic quantity from an output signal outputted from said extraction filter and using said characteristic quantity to make a judgment regarding whether said target object is good or not good; and
an output device that outputs said judgment by said judging device;
wherein said input device serves to prepare said inputted signal of sound or vibrations and normal data obtained from a normal object respectively as NG signal and OK signal; and
wherein said extraction filter carries out a method that comprises:
a first step of inputting said NG signal and said OK signal to said extraction filter, said NG signal containing an abnormal sound and said OK signal not containing said abnormal sound and containing noise that is contained in said NG signal;
a second step of separating said NG signal and said OK signal each into a stationary component having stationary property, white noise and a nonstationary component having nonstationary property; and
a third step of removing noise individually from said stationary component, white noise and nonstationary component having nonstationary property.

18. The device of claim 17 wherein said second step includes the steps of:
determining order of a linear prediction model; and
calculating filter coefficients and residual signal each of said NG signal and said OK signal.
